# EUROPÄISCHE PATENTSCHRIFT

(11) **EP 4 135 160 B1**
(45) Veröffentlichungstag und Bekanntmachung des Hinweises auf die Patenterteilung: **24.09.2025**
(21) Anmeldenummer: 22179167.6
(22) Anmeldetag: 15.06.2022
(51) Int. Cl.: H02K 1/18, H02K 1/14, H02K 1/16, H02K 15/028

(54) **STATOR FÜR EINEN ELEKTROMOTOR**
STATOR FOR AN ELECTRIC MOTOR
STATOR POUR UN MOTEUR ÉLECTRIQUE

(30) Priorität: 09.08.2021 DE 102021120675
(43) Veröffentlichungstag der Anmeldung: 15.02.2023
(73) Patentinhaber: ebm-papst Mulfingen GmbH & Co. KG, 74673 Mulfingen (DE)
(72) Erfinder: HÄFNER, Jochen, 74572 Blaufelden (DE)
(74) Vertreter: Staeger & Sperling Partnerschaftsgesellschaft mbB

(56) Entgegenhaltungen:
- JP-A- 2008 278 597
- JP-A- 2014 230 424
- JP-A- 2015 100 168
- JP-A- S56 112 839
- US-A1- 2017 085 140

## Beschreibung

Die Erfindung betrifft einen Stator für einen Elektromotor zum Fügen mit einer Achse des Elektromotors.

Aus dem Stand der Technik sind bereits verschiedene Varianten eines Stators bekannt, welcher beispielsweise bei einer Ausbildung des Elektromotors als Außenläufer mit einer Achse gefügt werden muss.

Zudem sind auch bereits aus einer Vielzahl von Einzelzähnen bestehende Statoren bekannt, welche mit der Achse formschlüssig und beispielsweise durch eine jeweilige Schwalbenschwanzverbindung fügbar sind. Dabei kann es durch auf die Einzelzähne wirkende Kräfte jedoch dazu kommen, dass diese bei der Montage bzw. beim Fügen des Stators mit der Achse voneinander getrennt werden und der Stator dadurch unabsichtlich demontiert bzw. beschädigt wird. Weiter ist es für die formschlüssige Verbindung nötig, sowohl die Einzelzähne als auch die Achse zur Verbindung mit dem Stator mit einer hohen Genauigkeit bzw. geringen Toleranz zu fertigen, da die Komponenten ansonsten nicht miteinander montiert werden können.

Stand der Technik bildende Statoren sowie Aspekte solcher Statoren sind beispielsweise aus den Dokumenten JP 2014 230424 A, JP 2008 278597 A sowie JP S56 112839 A bekannt.

Der Erfindung liegt deshalb die Aufgabe zugrunde, die vorgenannten Nachteile zu überwinden und einen einfach und schnell zu montierenden sowie eine Vielzahl von Einzelzähnen umfassenden Stator bereitzustellen.

Diese Aufgabe wird durch die Merkmalskombination gemäß Patentanspruch 1 gelöst.

Erfindungsgemäß wird daher ein Stator für einen vorzugsweise als Außenläufer ausgebildeten Elektromotor vorgeschlagen. Der Stator weist ein Statorpaket auf, welches aus einer Vielzahl von ringförmig um eine Rotationsachse des Elektromotors anordenbaren und in Umfangsrichtung miteinander verbundenen Einzelzähnen gebildet ist, sodass also der Stator bzw. das Statorpaket in die Einzelzähne segmentiert und als segmentierter Stator bezeichenbar ist. Jeder Einzelzahn der Vielzahl von Einzelzähnen wird dabei entlang der Umfangsrichtung um die Rotationsachse beidseitig von jeweils einem weiteren Einzelzahn der Vielzahl von Einzelzähnen flankiert und weist einen Verbindungsabschnitt zur mechanischen Fixierung des Einzelzahns mit den beiden ihn flankierenden Einzelzähnen auf. Ist der Elektromotor als Außenläufer ausgebildet, sodass also der Stator mit einer gegenüber dem Stator innen liegenden Achse verbunden ist, kann ein außenliegender Rotor des Elektromotors um die Achse und den Stator rotieren. Zumindest ein Teil der Einzelzähne und vorzugsweise alle Einzelzähne weist bzw. weisen jeweils einen radial innen liegenden Pressabschnitt zur elastischen und/oder plastischen Verformung und Herstellung einer Pressverbindung zwischen dem Statorpaket und einer Achse des Elektromotors auf, welche das Statorpaket entlang der Rotationsachse durchlaufend und zu der Rotationsachse koaxial anordenbar ist und welcher ferner auch als Achselement bezeichenbar ist, sodass der Stator bei einem Fügen mit der Achse durch die Verformung der Pressabschnitte und eine durch die Verformung zwischen Statorpaket und Achse wirkende Kraft an der Achse fixierbar ist. Dabei ist also der Pressabschnitt ausgebildet, beim Fügen mit der Achse selbst elastisch und/oder plastisch verformt zu werden, wobei die dabei auftretenden und auf den Einzelzahn wirkenden Kräfte vorzugsweise nicht oder nur bis zu einem zulässigen Grenzwert auf die weiteren Abschnitte des Einzelzahnes und insbesondere den Verbindungsabschnitt wirken.

Weiter ist bei dem erfindungsgemäßen Stator vorgesehen, dass die Pressabschnitte jeweils einen in Radialrichtung verlaufenden Steg und zumindest einen mit dem Steg verbundenen und gegenüber dem Steg in Umfangsrichtung hervorstehenden Hebelarm mit einer in Radialrichtung nach innen weisenden Anlagefläche zur Anlage an der Achse aufweisen. Der zumindest einen Hebelarm, welcher vorzugsweise den Pressabschnitt und weiter vorzugsweise den Einzelzahn an einer zu der Achse weisenden Seite abschließt, ist bei dem Fügen in Radialrichtung auslenkbar und verformbar, sodass durch die Auslenkung und Verformung eine Presskraft auf die Achse ausübbar ist.

Ferner kann gemäß einer weiteren vorteilhaften Ausgestaltung des Stators vorgesehen sein, dass die Hebelarme durch ihre Anlageflächen gemeinsam eine zu der Rotationsachse koaxiale, hülsenförmige Presskontur bestimmen, welche gegenüber einer Außenkontur der Achse ein Übermaß aufweist, sodass die Hebelarme bei dem Fügen mit der Achse nach radial außen gepresst werden.

Entsprechend kann der Stator durch die Verformung der Pressabschnitte mittels einer Pressverbindung an der Achse fixiert werden.

Durch eine solche elastisch, plastische Pressverbindung zwischen Stator bzw. Statorpaket und Achse kann eine beim Fügen im Bereich der Verbindungsabschnitte auf die Einzelzähne wirkende und diese voneinander trennende Kraft durch eine örtliche auf die Pressabschnitte beschränkte Verformung begrenzt und eine Beschädigung des Statorpakets durch Separierung der Einzelzähne verhindert werden. Weiter wird ein Toleranzausgleich allein durch die Pressabschnitte bzw. durch die Verformung der Pressabschnitte ermöglicht, sodass an die Achse weniger hohe fertigungstechnische Anforderungen bestehen. Entsprechend kann die Achse auch bezüglich ihrer jeweiligen Presskontur variabel sein, sodass innerhalb des durch die Pressabschnitte ausgleichbaren Bereichs für verschiedene Achsen keine anderen Statorpakete bzw. Einzelzähne gefertigt werden müssen. Weiter muss das Statorpakete für ein Fügen mit der Achse auch nicht gereinigt werden, da Verunreinigungen durch die Pressverbindung ausgeglichen werden bzw. durch die Toleranz berücksichtigt sind.

Da auch bei einer plastischen Verformung die Hebelarme zumindest anteilig elastisch verformt werden, wirken diese zugleich als Feder, sodass diese auch als Federarme bezeichnet werden können, welche beim bzw. nach dem Fügen eine Federkraft auf die Achse ausüben.

Die Anlageflächen der Hebelarme sind erfindungsgemäß zudem konkav ausgebildet. Dabei können sowohl die Anlageflächen der Hebelarme jeweils konkav als auch die Anlageflächen der Hebelarme eines Pressabschnitts durch ihre Anordnung zueinander konkav sein.

Weiter weisen die Pressabschnitte jeweils zwei gegenüber dem Steg in Umfangsrichtung hervorstehende Hebelarme zur Anlage an die Achse auf, welche einander gegenüberliegen und in einander entgegengesetzte Richtungen gegenüber dem Steg hervorstehenden.

Um eine unabhängige Auslenkung und Verformung der zwei Hebelarme sicherzustellen, ist an den Pressabschnitten jeweils zwischen den zwei Hebelarmen zumindest eine die Hebelarme voneinander entkoppelnde Nut bzw. ein die Hebelarme entkoppelnder Freiraum ausgebildet, welche die Hebelarme voneinander trennt, sodass diese unabhängig voneinander auslenkbar und verformbar sind.

Der Steg kann sich dabei von dem Pressabschnitt bis zu dem Verbindungsabschnitt des jeweiligen Einzelzahnes erstrecken.

Vorzugsweise sind die Hebelarme jeweils über einen insbesondere als Verjüngung ausgebildeten Anbindungsabschnitt mit dem Steg verbunden, durch welchen eine beim Fügen wirkende Kraft vorbestimmbar ist. Beispielsweise kann durch eine Dicke bzw. allgemein geometrische Ausgestaltung des Anbindungsabschnitts die notwendige und/oder maximale Kraft zur Auslenkung des jeweiligen Hebelarms bestimmt werden, sodass gezielt eine Kraft einstellbar ist, welche benötigt wird, um den Hebelarm aus einer Grundstellung vor dem Fügen mit der Achse in eine Pressstellung nach dem Fügen mit der Achse zu bewegen.

Weiter weisen die Hebelarme vorzugsweise an einer dem jeweiligen Anbindungsabschnitt gegenüberliegenden Seite jeweils ein freies Ende auf, sodass diese durch den Anbindungsabschnitt an dem Steg gehalten federnd bzw. elastisch und am Ende eines elastischen Bereichs plastisch verformt bzw. in Radialrichtung ausgelenkt werden können.

Um den Stator bei einem Fügen mit der Achse weiter vor einer ungewollten Demontage, also einer Separierung der Einzelzähne bzw. einem Aufbrechen der durch die Verbindungsabschnitte hergestellten mechanischen Verbindung, zu schützen, sieht eine vorteilhafte Weiterbildung vor, dass die Pressabschnitte derart ausgebildet sind, dass eine beim Fügen durch die Verformung der Pressabschnitte auf die Verbindungsabschnitte wirkende und die Einzelzähne voneinander separierende Kraft kleiner ist, als eine maximal zulässige Kraft an den Verbindungsabschnitten, sodass es beim Fügen nicht zu einem Separieren der Einzelzähne kommt. Die Kraft kann beispielsweise durch eine entsprechende Ausbildung der Pressabschnitte bzw. beispielsweise der Anbindungsabschnitte derart eingestellt werden.

Um bei einem Fügen d.h. bei einem Einpressen der Achse in das Statorpaket eine einfache Zentrierung zu ermöglichen, können an den Pressabschnitten und insbesondere an den Hebelarmen Einführschrägen vorgesehen sein, an welchen die Achse entlang der Rotationsachse in das Statorpaket geführt werden kann.

Alternativ können solche Einführschrägen auch an der Achse vorgesehen sein.

Ein weiterer Aspekt der Erfindung betrifft einen Elektromotor mit einem solchen erfindungsgemäßen Stator.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Darstellung eines mit einer Achse gefügten Statorpakets;
- Fig. 2: ein Ausschnitt aus einer Aufsicht auf ein mit einer Achse gefügtes Statorpaket;
- Fig. 3: ein Pressabschnitt eines Einzelzahns eines mit einer Achse gefügten Statorpakets.

Die Figuren sind beispielhaft schematisch. Gleiche Bezugszeichen in den Figuren weisen auf gleiche funktionale und/oder strukturelle Merkmale hin.

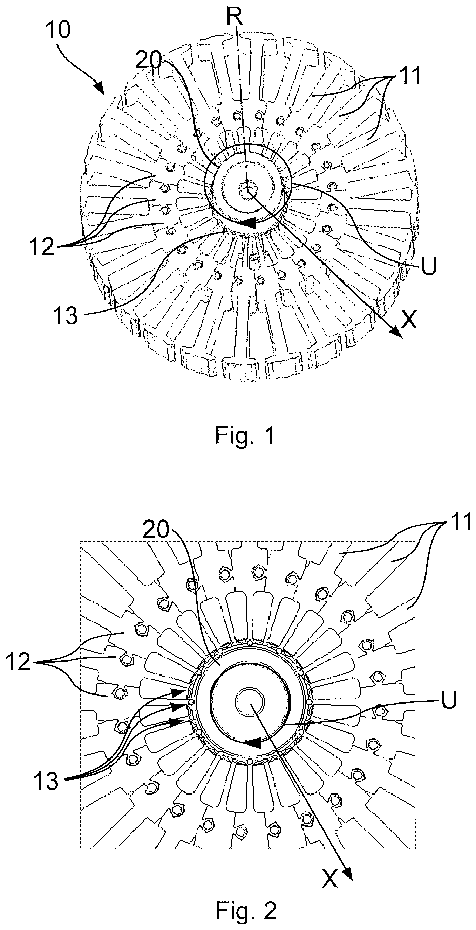

In Figur 1 ist ein mit einer Achse 20 gefügtes Statorpaket 10 perspektivisch dargestellt. Wird ein Statorpaket 10, wie hier, aus einer Vielzahl von Einzelzähnen 11 gebildet, welche in Umfangsrichtung U miteinander verbunden sind, kann es bei einem Fügen des Statorpakets 10 mit der Achse 20 dazu kommen, dass die im Bereich der Verbindungsabschnitte 12, durch welche die Einzelzähne 11 in Umfangsrichtung U miteinander mechanisch verbunden bzw. aneinander fixiert sind, zu unzulässig hohen Kräften kommt, durch welche die mechanische Verbindung gelöst und die Einzelzähne 11 voneinander separiert werden und also das Statorpaket demontiert oder sogar beschädigt wird.

Um eine solche Demontage bzw. Beschädigung des Statorpakets 10 zu verhindern, weisen zumindest ein Teil der Einzelzähne 11 und besonders vorzugsweise - wie in den Figuren 1 bis 3 abgebildet - alle Einzelzähne 11 einen Pressabschnitt 13 auf, welcher für das Fügen des Statorpakets 10 mit der Achse 20 ausgebildet ist.

Der Pressabschnitt 13 liegt radial zu der Rotationsachse R, um welche ein Rotor des Elektromotors um den Stator rotieren kann, innen und schließt die Einzelzähne 11 in Radialrichtung X nach innen bzw. zu der Achse 20 hin ab.

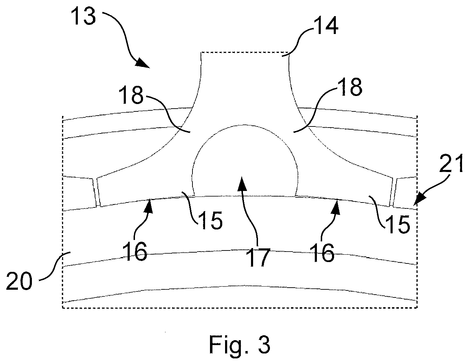

Figur 2 entspricht einem Ausschnitt einer Aufsicht auf das Statorpaket 10 mit der damit gefügten Achse 20, wie es durch Figur 1 dargestellt ist. Hierdurch wird insbesondere erkennbar, dass das Statorpaket 10 ausschließlich durch die Pressabschnitte 13 der Einzelzähne 11 des Statorpakets 10 an der Achse 20 anliegt und dass die Pressabschnitte 13 der Einzelzähne 11 gemeinsam eine hülsenförmige Presskontur bestimmen, welche zu der Außenkontur der Achse 20 korrespondiert, jedoch zu dieser ein Übermaß aufweist. Durch das Übermaß kann die Achse 20 in der durch die Pressabschnitte 13 gebildete Presskontur angeordnet und eingepresst werden, sodass es bei dem Einpressen zu einer Verformung der Pressabschnitte 13 bzw. zu einer Verformung der in Figur 3 dargestellten Hebelarme 15 der Pressabschnitte 13 kommt, durch welche die Hebelarme 15 nach radial außen gepresst werden und eine Presskraft auf die Achse 20 ausüben.

In Figur 3 ist ein einzelner Pressabschnitt 13 vergrößert dargestellt, wodurch erkennbar wird, dass der Pressabschnitt 13 nach radial innen von zwei Hebelarmen 15 abgeschlossen wird, welche durch eine Schwächung bzw. eine Nut 17 voneinander getrennt, jedoch jeweils über eine Verjüngung bzw. einen Anbindungsabschnitt 18 mit dem Steg 14 verbunden sind.

Durch die Anbindungsabschnitte 18 und die Nut 17 können die Hebelarme 15 unabhängig voneinander ausgelenkt werden, wobei diese jeweils gegenüberliegend ihrem in den Anbindungsabschnitt 18 übergehenden Ende ein freies Ende aufweisen, sodass diese bei einem Fügen mit der Achse 20 zunächst elastisch ausweichen und vorzugweise am Ende der elastischen Verformung plastisch verformt werden können.

Die Hebelarme 15 weisen jeweils eine Anlagefläche 16 zur Anlage an der Achse 20 auf, wobei jede der Anlageflächen 16 oder die beiden Anlageflächen 16 des Pressabschnitts 13 gemeinsam eine konkave Form beschreiben bzw. konkav ausgebildet sein können. Durch die beiden Anlageflächen 16 werden entsprechend je Pressabschnitt zwei Anlagebereiche bzw. Anlagepunkte bereitgestellt, über welche der jeweilige Einzelzahn 11 an der Achse 20 anliegt.

Um zu verhindern, dass die miteinander an den Verbindungsabschnitten 12 verbundenen Einzelzähne 11 bei einem Fügen d.h. einem Einpressen der Achse 20 in den Stator bzw. in die durch die Pressabschnitte 13 gebildete Presskontur voneinander separiert werden, sind die Anbindungsabschnitte 18 derart ausgebildet, dass es bei einem Fügen und einer damit einhergehenden Auslenkung der Hebelarme 15 an den Verbindungsabschnitten 12 eine Kraft wirkt, welche kleiner ist als eine maximal zulässige Kraft, durch welche die Einzelzähne 11 an den Verbindungsabschnitten 12 voneinander separiert werden würden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Stator für einen Elektromotor,
wobei der Stator ein Statorpaket (10) aufweist, welches aus einer Vielzahl von ringförmig um eine Rotationsachse (R) des Elektromotors anordenbaren und in Umfangsrichtung (U) miteinander verbundenen Einzelzähnen (11) gebildet ist,
wobei jeder Einzelzahn (11) der Vielzahl von Einzelzähnen entlang der Umfangsrichtung (U) beidseitig von jeweils einem weiteren Einzelzahn (11) der Vielzahl von Einzelzähnen (11) flankiert wird und einen Verbindungsabschnitt (12) zur mechanischen Fixierung des Einzelzahns (11) mit den flankierenden Einzelzähnen (11) aufweist,
wobei zumindest ein Teil der Einzelzähne (11) jeweils einen radial innen liegenden Pressabschnitt (13) zur elastischen und/oder plastischen Verformung und Herstellung einer Pressverbindung zwischen dem Statorpaket (10) und einer Achse (20) des Elektromotors aufweist, welche das Statorpaket (10) entlang der Rotationsachse (R) durchlaufend und zu der Rotationsachse (R) koaxial anordenbar ist, sodass der Stator bei einem Fügen mit der Achse (20) durch die Verformung der Pressabschnitte (13) und eine durch die Verformung zwischen Statorpaket (10) und Achse (20) wirkende Kraft an der Achse (20) fixierbar ist,
wobei die Pressabschnitte (13) jeweils einen in Radialrichtung (X) verlaufenden Steg (14) und zumindest einen mit dem Steg (14) verbundenen und gegenüber dem Steg (14) in Umfangsrichtung (U) hervorstehenden Hebelarm (15) mit einer in Radialrichtung (X) nach innen weisenden Anlagefläche (16) zur Anlage an der Achse (20) aufweisen,
wobei der zumindest eine Hebelarm (15) bei dem Fügen in Radialrichtung (X) auslenkbar und verformbar ist, sodass durch die Auslenkung und Verformung eine Presskraft auf die Achse (20) ausübbar ist,
**dadurch gekennzeichnet, dass**
die Anlageflächen (16) der Hebelarme (15) konkav ausgebildet sind,
wobei die Pressabschnitte (13) jeweils zwei gegenüber dem Steg (14) in Umfangsrichtung hervorstehende Hebelarme (15) aufweisen, welche einander gegenüberliegen und in einander entgegengesetzte Richtungen gegenüber dem Steg (14) hervorstehenden und
wobei an den Pressabschnitten (13) jeweils zwischen den zwei Hebelarmen (15) zumindest eine die Hebelarme (15) voneinander entkoppelnde Nut (17) ausgebildet ist, welche die Hebelarme (15) voneinander trennt, sodass diese unabhängig voneinander auslenkbar und verformbar sind.

2. Stator nach Anspruch 1,
wobei die Hebelarme (15) durch ihre Anlageflächen (16) gemeinsam eine zu der Rotationsachse (R) koaxiale, hülsenförmige Presskontur bestimmen, welche gegenüber einer Außenkontur (21) der Achse (20) ein Übermaß aufweist, sodass die Hebelarme (15) bei dem Fügen mit der Achse (20) nach radial außen gepresst werden.

3. Stator nach einem der vorhergehenden Ansprüche 1 oder 2,
wobei die Hebelarme (15) jeweils über einen Anbindungsabschnitt (18) mit dem Steg (14) verbunden sind, durch welchen eine beim Fügen wirkende Kraft vorbestimmbar ist.

4. Stator nach dem vorhergehenden Anspruch,
wobei Anbindungsabschnitt (18) als eine Verjüngung ausgebildet ist.

5. Stator nach einem der vorhergehenden Ansprüche,
wobei die Pressabschnitte (13) derart ausgebildet sind, dass eine beim Fügen durch die Verformung der Pressabschnitte (13) auf die Verbindungsabschnitte (12) wirkende und die Einzelzähne (11) voneinander separierende Kraft kleiner ist, als eine maximal zulässige Kraft, sodass es beim Fügen nicht zu einem Separieren der Einzelzähne (11) kommt.

6. Elektromotor mit einem Stator nach einem der vorhergehenden Ansprüche.

## Claims

1. A stator for an electric motor,
wherein the stator has a laminated stator core (10) which is formed by a plurality of individual teeth (11) which can be arranged in the manner of a ring around an axis of rotation (R) of the electric motor and are connected to one another in the circumferential direction (U),
wherein each individual tooth (11) of the plurality of individual teeth (11) is flanked on both sides along the circumferential direction by a further individual tooth (11) from among the plurality of individual teeth (11) and has a connection portion (12) for mechanically fixing the individual tooth (11) to the flanking individual teeth (11),
wherein at least some of the individual teeth (11) and, preferably, all of the individual teeth (11) each have a radially inner pressing portion (13) for elastic and/or plastic deformation and establishment of a press-fit connection between the laminated stator core (10) and the axle (20) of the electric motor which can be arranged so as to extend through the laminated stator core (10) along the axis of rotation (R) and coaxially with the axis of rotation (R), so that, upon joining of the stator to the axle (20), the stator can be fixed to the axle (20) through the deformation of the pressing portions (13) and a force acting on the axle (20) as a result of the deformation between laminated stator core (10) and axle (20).
wherein the pressing portions (13) each have a web (14) extending in the radial direction (X) and at least one lever arm (15) which is connected to the web (14) and projects in the circumferential direction (U) relative to the web (14) and which has a contact surface (16) that points inward in the radial direction (X) for contact with the axle (20),
wherein the at least one lever arm (15) can be deflected and deformed in the radial direction (X) during joining, so that a pressing force can be exerted on the axle (20) as a result of the deflection and deformation,
**characterized in that** the contact surfaces (16) of the lever arms (15) are concave, wherein the pressing portions (13) each have two lever arms (15) which protrude in the circumferential direction (U) relative to the web (14) and which are situated opposite one another and protrude in opposite directions relative to the web (14) and
wherein at least one groove (17) is respectively formed on the pressing portions (13) between the two lever arms (15) which decouples the lever arms (15) from one another and separates the lever arms (15) from one another so that they can be deflected and deformed independently of one another.

2. The stator according to claim 1,
wherein the lever arms (15) together define a sleeve-shaped pressing contour with their contact surfaces (16) that is coaxial with the axis of rotation (R) and oversized compared to an outer contour (21) of the axle (20), so that the lever arms (15) are pressed radially outward when joined to the axle (20).

3. The stator according to any one of preceding claims 1 or 2,
wherein the lever arms (15) are each connected to the web (14) via a connection portion (18) by means of which a force exerted during joining can be predetermined.

4. The stator according to the preceding claim,
wherein the connection portion (18) is embodied as a taper.

5. The stator according to any one of the preceding claims,
wherein the pressing portions (13) are embodied such that, due to the deformation of the pressing portions (13), a force acting on the connection portions (12) and separating the individual teeth (11) from one another is smaller during joining than a maximum permissible force, so that the individual teeth (11) do not separate during joining.

6. An electric motor with a stator as set forth in one of the preceding claims.

## Revendications

1. Stator pour moteur électrique,
dans lequel le stator comporte un noyau de stator (10) formé d'une pluralité de dents individuelles (11) pouvant être disposées en anneau autour d'un axe de rotation (R) du moteur électrique et reliées les unes aux autres dans la direction circonférentielle (U),
dans lequel chaque dent individuelle (11) de la pluralité de dents individuelles est flanquée des deux côtés le long de la direction circonférentielle (U) par une autre dent individuelle (11) de la pluralité de dents individuelles (11) et comporte une section de liaison (12) pour fixer mécaniquement la dent individuelle (11) aux dents individuelles flanquantes (11),
dans lequel au moins certaines des dents individuelles (11) présentent chacune une section de pression radialement intérieure (13) pour une déformation élastique et/ou plastique et la production d'une liaison par pression entre le noyau de stator (10) et un axe (20) du moteur électrique, laquelle liaison par pression traverse le noyau de stator (10) le long de l'axe de rotation (R) et peut être disposée coaxialement à l'axe de rotation (R), de sorte que le stator peut être fixé à l'axe (20) lorsqu'il est joint à l'axe (20) par la déformation des sections de pression (13) et une force agissant entre le noyau de stator (10) et l'axe (20) en raison de la déformation,
dans lequel les sections de pression (13) ont chacune une âme (14) s'étendant dans la direction radiale (X) et au moins un bras de levier (15) relié à l'âme (14) et faisant saillie dans la direction circonférentielle (U) par rapport à l'âme (14) avec une surface de contact (16) pointant vers l'intérieur dans la direction radiale (X) pour le contact avec l'axe (20),
dans lequel l'au moins un bras de levier (15) est déformable et flexible dans la direction radiale (X) pendant l'assemblage, de sorte qu'une force de pression peut être exercée sur l'axe (20) par la déflexion et la déformation,
**caractérisé en ce que**
les surfaces de contact (16) des bras de levier (15) sont concaves,
dans lequel les sections de pression (13) ont chacune deux bras de levier (15) faisant saillie dans la direction circonférentielle par rapport à l'âme (14), qui sont opposés l'un à l'autre et faisant saillie dans des directions opposées par rapport à l'âme (14) et
dans lequel au moins une rainure (17) est formée sur les sections de pression (13) entre les deux bras de levier (15) dans chaque cas, laquelle rainure découple les bras de levier (15) l'un de l'autre et sépare les bras de levier (15) l'un de l'autre de sorte qu'ils peuvent être déviés et déformés indépendamment l'un de l'autre.

2. Stator selon la revendication 1,
dans lequel les bras de levier (15) déterminent conjointement, au moyen de leurs surfaces de contact (16), un contour de pression en forme de manchon qui est coaxial à l'axe de rotation (R) et qui présente une surdimension par rapport à un contour extérieur (21) de l'axe (20), de sorte que les bras de levier (15) sont pressés radialement vers l'extérieur lorsqu'ils sont reliés à l'axe (20).

3. Stator selon l'une quelconque des revendications précédentes 1 ou 2,
dans lequel les bras de levier (15) sont chacun reliés à l'âme (14) par l'intermédiaire d'une section de liaison (18), au moyen de laquelle une force agissant lors de la jonction peut être prédéterminée.

4. Stator selon la revendication précédente,
dans lequel la section de connexion (18) est conçue comme un cône.

5. Stator selon l'une quelconque des revendications précédentes,
dans lequel les sections de pression (13) sont conçues de telle sorte qu'une force agissant sur les sections de liaison (12) lors de l'assemblage en raison de la déformation des sections de pression (13) et séparant les dents individuelles (11) les unes des autres est inférieure à une force maximale admissible, de sorte que les dents individuelles (11) ne se séparent pas lors de l'assemblage.

6. Moteur électrique avec un stator selon l'une quelconque des revendications précédentes.
